# EUROPÄISCHE PATENTSCHRIFT

(11) **EP 4 139 189 B1**
(45) Veröffentlichungstag und Bekanntmachung des Hinweises auf die Patenterteilung: **26.11.2025**
(21) Anmeldenummer: 21722764.4
(22) Anmeldetag: 13.04.2021
(51) Int. Cl.: B62D 15/02, G08G 1/14, G05D 1/00, B60W 30/06, G06N 3/08, G08G 1/16

(54) **VERFAHREN ZUM PLANEN EINES AUTOMATISIERTEN PARKVORGANGS FÜR EIN FAHRZEUG**
METHOD FOR PLANNING AN AUTOMATED PARKING PROCESS FOR A VEHICLE
PROCÉDÉ DE PLANIFICATION D'UN PROCESSUS DE STATIONNEMENT AUTOMATISÉ POUR UN VÉHICULE

(30) Priorität: 22.04.2020 DE 102020205072
(43) Veröffentlichungstag der Anmeldung: 01.03.2023
(73) Patentinhaber: AUMOVIO Autonomous Mobility Germany GmbH, 85057 Ingolstadt (DE)
(72) Erfinder: YOO, Yong-Ho, 90411 Nürnberg (DE); DEUSCH, Hendrik, 90411 Nürnberg (DE); PREDIGER, Mark, 90411 Nürnberg (DE)
(74) Vertreter: Aumovio Corporation
(86) Internationale Anmeldenummer: PCT/DE2021/200046
(87) Internationale Veröffentlichungsnummer: WO 2021/213593

(56) Entgegenhaltungen:
- WO-A1-2019/080975
- WO-A1-2019/182621

## Beschreibung

Die Erfindung betrifft ein Verfahren zum Planen eines automatisierten Parkvorgangs für ein Fahrzeug, ein Computerprogrammprodukt, eine Parkassistenzvorrichtung sowie ein Fahrzeug mit der Parkassistenzvorrichtung.

Aus dem Stand der Technik sind Parkassistenzsysteme bereits bekannt, mittels denen ein Parkvorgang teilautomatisiert bzw. vollautomatisiert geplant und durchgeführt werden können. Dabei wird das Fahrzeug durch das Parkassistenzsystem auf einer zuvor in einer Planungsphase berechneten Parktrajektorie in die Parkposition manövriert.

Aus dem Stand der Technik ist es außerdem bekannt, zur Planung der Parktrajektorie eine deterministische Planungsmethode zu verwenden, die auf Rechenregeln basiert und mittels geometrischer Verfahren eine Parktrajektorie zu bestimmen versucht. Eine derartige deterministische Planungsmethode weist einen oder mehrere Sätze von Rechenregeln auf, wobei jeder Satz von Rechenregeln sich auf ein bestimmtes Parkszenario, beispielsweise Rückwärtseinparken bei einer Längsparksituation, bezieht. Nachteilig bei einer deterministischen Planungsmethode ist, dass diese eine sehr geringe Flexibilität bei Abweichungen von dem zu Grunde liegenden Parkszenario hat und auch nicht flexibel auf eine sich verändernde Parksituation reagieren kann, was zu häufigen Park-Fehlversuchen führen kann.

Des Weiteren sind generische Planungsmethoden bekannt geworden, die nicht auf ein bestimmtes Parkszenario beschränkt sind, sondern bei verschiedenen Parkszenarien anwendbar sind und auch in einem komplexen, sich zeitlich verändernden Parkszenario eine Parktrajektorie berechnen können. Nachteilig bei generischen Planungsmethoden ist, dass diese sehr rechenaufwendig sind, d.h. viel Prozessorleistung und Speicherplatz benötigen. Zudem liefern generische Planungsmethoden schon bei sehr geringen Veränderungen der Parksituation ein sehr unterschiedliches Parkverhalten, was von den Fahrern als nachteilig empfunden wird, da diese ein relativ konstantes Parkverhalten des Parkassistenzsystems erwarten. Zudem ist es bei generischen Planungsmethoden sehr schwierig, vom jeweiligen Fahrer erwartete Eigenschaften einzuhalten, da generische Planungsmethoden nicht zwischen Parkszenarios unterscheiden und unabhängig vom Parkszenario stets den gleichen Algorithmus verwenden, um eine Parktrajektorie zu berechnen.

Aus der WO 2019/182621 A1 ist ein System einer neuronal netzwerkbasierten Pfaderzeugung für eine Fahrzeugsteuerung bekannt. Mit einem ersten neuronalen Netz wird eine digitale Kartendatenstruktur generiert, wobei mit einem zweiten neuronalen Netz ein erster Pfad basierend auf der digitalen Kartendatenstruktur generiert wird, wobei mit einem dritten neuronalen Netz ein zweiter Pfad zum Einparken des Fahrzeugs auf der Grundlage des ersten Pfads generiert wird, wobei ein Parkvorgang des Fahrzeugs entlang des zweiten Pfads angesteuert wird. WO 2019/182621 A1 offenbart insbesondere ein Verfahren zum Planen eines automatisierten Parkvorgangs für ein Fahrzeug, umfassend folgende Schritte:
- Erfassen von Umgebungsdaten über einen Umgebungsbereich des Fahrzeugs,
- Ermitteln eines Parkszenarios basierend auf den ermittelten Umgebungsdaten,
- Bereitstellen von Manöversets, wobei jedes der Manöversets eine Mehrzahl an parametrisierten Fahrmanövern umfasst, die das gleiche Trajektorienmuster aufweisen.

WO 2019/080975 A1 beschreibt ein Parkassistenzsystem, dessen Fahrerparameter an nutzerspezifisches Parkverhalten angepasst werden. Die Fahrerparameter werden während eines vom Fahrer durchgeführten Parkvorgangs erlernt, wobei Parkparameter basierend auf den erlernten Fahrerparameter bestimmt werden. Die Steuerung des Parkvorgangs des Fahrzeugs erfolgt basierend auf den bestimmten Parkparametern.

Ausgehend hiervon ist es Aufgabe der Erfindung ein Verfahren sowie eine Parkassistenzvorrichtung anzugeben, welche einen auf den Fahrerwunsch abgestimmten und effizienten Parkvorgang erzielen.

Die Aufgabe wird durch ein Verfahren mit den Merkmalen des unabhängigen Anspruchs 1, durch ein Computerprogramm mit den Merkmalen des Anspruchs 5, durch eine Parkassistenzvorrichtung mit den Merkmalen des Anspruchs 6, sowie durch ein Fahrzeug mit den Merkmalen des Anspruchs 9 gelöst. Bevorzugte Ausführungsformen sind Gegenstand der Unteransprüche.

Die Erfindung bezieht sich auf ein Verfahren zum Planen eines automatisierten Parkvorgangs für ein Fahrzeug. Unter dem automatisierten Parkvorgang ist insbesondere ein teil-, hoch- oder vollautomatisierter Ein- oder Ausparkvorgang zu verstehen.

Das Verfahren umfasst als einen ersten Verfahrensschritt die Erfassung von Umgebungsdaten über einen Umgebungsbereich des Fahrzeugs z. B. mittels fahrzeuginterner Sensoren wie Radar, Kamera und/oder Ultraschallsensoren, als beispielhafte Alternative oder Ergänzung mittels Car-to-X-Kommunikation. Insbesondere umfassen die Umgebungsdaten Umfeldinformationen, so z. B. Informationen über statische und dynamische Objekte im Umgebungsbereich des zu parkenden Fahrzeugs. Vorzugsweise erfolgt eine Umfeldmodellierung basierend auf den erfassten Umgebungsdaten.

Es wird basierend auf den erfassten Umgebungsdaten ein Parkszenario im Umgebungsbereich des Fahrzeugs ermittelt. Insbesondere wird beim Ermitteln des Parkszenarios zumindest eine geeignete Zielposition, so z. B. eine geeignete Parklücke, und die Art des Parkvorgangs erfasst. Bei der Art des Parkvorgangs sei rein beispielhaft rückwärts senkrechtes Einparken oder paralleles Einparken zu nennen. Des Weiteren werden insbesondere Egodaten des zu parkenden Fahrzeugs ermittelt. Die Egodaten umfassen vorzugsweise Positionsdaten des Fahrzeugs relativ zu der ermittelten Zielposition. Das Ermitteln des Parkszenarios umfasst somit insbesondere die Ermittlung der Positionsdaten des Fahrzeugs.

Des Weiteren werden Manöversets bereitgestellt. Ein Manöverset ist ein Set von geometrischen Segmenten, so z. B. ein Kreissegment, Geradesegment oder eine Klothoide, mit einer festen Reihenfolge an Segmenttypen, so rein beispielhaft Kreis-links-vorwärts, Kreis-rechts-rückwärts oder Kreis-rechts-rückwärts-Geradensegment-Kreis-links-rückwärts. Demnach kann ein Manöverset vorzugsweise einen Trajektorienabschnitt und/oder eine Gesamttrajektorie für mindestens ein Parkszenario abbilden. Die bereitgestellten Manöversets zumindest abschnittsweise für mindestens ein Einparkszenario wie z. B. Parallelparken, frontales Einparken, senkrechtes Einparken, seitlich Rückwärtseinparken, seitlich Vorwärtseinparken etc. anwendbar. Ein Manöverset kann beispielsweise mittels Simulation, manuell durch einen menschlichen Experten oder mittels eines künstlich intelligenten Systems erstellt werden.

Jedes der bereitgestellten Manöversets umfasst eine Mehrzahl an parametrisierten Fahrmanövern, z. B. mindestens zwei, vorzugsweise mindestens drei Fahrmanöver, die das gleiche Trajektorienmuster aufweisen. Vorzugsweise weisen alle der parametrisierten Fahrmanöver eines Manöversets ein bestimmtes Trajektorienmuster auf und unterscheiden sich lediglich in bestimmten Variablen. Durch die Parametrisierung können vorteilhafterweise eine Vielzahl von sich ähnelnden Parkszenarios abgedeckt werden.

Es wird mindestens eine Parktrajektorie bereitgestellt, wobei zur Bereitstellung der mindestens einen Parktrajektorie eine Auswahl von mindestens einem der bereitgestellten Manöversets durch ein trainiertes, machine learning basiertes System erfolgt. In diesem Zusammenhang ist bevorzugt, dass die Auswahl auch die Kombination von mindestens zwei oder mehr Manöversets bzw. von parametrisierten Fahrmanövern einschließt, um die Gesamttrajektorie des ermittelten Parkszenarios abzubilden.

Die Auswahl durch das trainierte, machine learning basierte System basiert auf trainierten Parametern des machine learning basierten Systems, der erfassten Umgebungsdaten und dem ermittelten Parkszenario. Bei der Auswahl kann z. B. ein Wahrscheinlichkeitswert für jedes Manöverset bestimmt werden, welcher beschreibt, wie wahrscheinlich dieses Manöverset eine umsetzbare Parktrajektorie erzeugt. Beispielhaft sei ein neuronales Netz als ein machine learning basiertes System zu nennen.

Im Gegensatz zu auf Basis von vorher festgelegten Regeln arbeitenden Parkverfahren kann insbesondere ein selbsterlernendes maschinelles Lernverfahren die besten Regeln für die Lösung bestimmter Aufgaben eigenständig lernen. Insbesondere wird ermöglicht, eine erweiterte Trajektorienplanung im Vergleich zu deterministischen Ansätzen zu erzielen. Konkret ist das trainierte, machine learning basierte System in der Lage, eine intelligente Auswahl an umsetzbaren Manöversets für das jeweilige Parkszenario zu treffen. Auf diese Weise können Parktrajektorien mit einer geringen Fehlversuchsquote erzielt werden.

Des Weiteren kann die Menge an Varianten bzgl. verschiedenster Parksituationen unter Berücksichtigung möglicher Umfeldsituationen und Positionen des Ego-Fahrzeugs in der entsprechenden Umfeldsituation z. B. durch einen menschlichen Experten realistisch nicht umgesetzt werden. Folglich ist ein wesentlicher Vorteil der Erfindung, dass nunmehr ein intelligentes Parkassistenzverfahren bereitgestellt wird, welches eine Anzahl an Parksituationen abdecken kann, wie es bislang nicht möglich war. Zugleich werden nunmehr Parktrajektorien mit einer hohen Fahrerakzeptanz erzielt, da die Parktrajektorien auf den bereitgestellten Manöversets basieren, welche die vom Fahrer gewünschten Parkeigenschaften einhalten.

Gemäß einer bevorzugten Ausgestaltung erfolgt eine Anpassung des mindestens einen ausgewählten Manöversets auf Basis der erfassten Umgebungsdaten und des ermittelten Parkszenarios. Beispielsweise erfolgt die Anpassung durch das trainierte, machine learning basierte System oder durch eine Auswerteeinrichtung einer Parkassistenzvorrichtung. Insbesondere sind die Manöversets parametrisiert, sodass eine Anpassung an das aktuell ermittelte Parkszenario und der erfassten Umgebungsdaten auf effiziente Weise ermöglicht ist. Vorzugsweise wird das mindestens eine ausgewählte und angepasste Manöverset als die mindestens eine Parktrajektorie bereitgestellt und z. B. an eine Steuereinrichtung der Parkassistenzvorrichtung ausgegeben.

Das Trainieren des machine learning basierten Systems wie das neuronale Netzwerk kann z. B. mittels überwachten Lernens erfolgen. Zum Trainieren des machine learning basierten Systems ist bevorzugt, dass Messdaten realer Parkszenarien aufgezeichnet werden, wobei die Messdaten von einem Fahrer manövrierte Parktrajektorien und entsprechende Umfeldmodelle umfassen. Als beispielhafte Alternative zu den aufgezeichneten Testfahrten sind auch Simulationsdaten von manövrierten Parktrajektorien und entsprechende Umfeldmodelle möglich. Vorzugsweise werden zur Erweiterung der Messdaten bzw. Simulationsdaten in einem nächsten Schritt die manövrierten Parktrajektorien und entsprechenden Umfeldmodelle modifiziert, indem z. B. eine Anpassung der Umfeldsituation wie die Ego-Fahrzeugposition, die Zielposition und/oder Formen und Positionen von Messobjekten in der erfassten Umgebung erfolgt. Gemäß einem weiteren bevorzugten Schritt werden die modifizierten Messdaten geprüft, ob sie für das jeweils vorgegebene Parkszenario anwendbar sind. Insbesondere erfolgt das Trainieren des machine learning basierten Systems auf Basis der anwendbaren Daten. Nach Beendigung der Trainingsphase liegen die trainierten Parameter des trainierten, machine learning basiertes System vor, mittels dieser die intelligente Auswahl der bereitgestellten Manöversets erfolgt.

Es ist bevorzugt, dass das Trainieren des machine learning basierten Systems vor einer Inbetriebnahme im Fahrzeug erfolgt, folglich das Fahrzeug das machine learning basiertes System im trainierten Zustand umfasst. Auf diese Weise ist eine effiziente und ressourcensparende Trajektorienplanung im Fahrzeug umgesetzt.

Sollte ein bestimmtes Parkszenario durch das trainierte, machine learning basierte System nicht abgedeckt werden können, kann optional ergänzend vorgesehen sein, dass ein Manöverset durch einen menschlichen Experten erstellt und zu den bereits bereitgestellten Manöversets ergänzt wird. Das kann z. B. auch dann erfolgen, wenn Fahrzeuge die erfindungsgemäße Fahrerassistenzvorrichtung bereits umfassen, indem beispielsweise nicht erfolgreich bewältigte Parkszenarien abgespeichert und an den menschlichen Experten übermittelt werden, welcher daraufhin ein passendes Manöverset erstellen kann. Beispielsweise kann das nachträglich erstellte Manöverset über ein Update auf ein Elektroniksystem des Fahrzeugs aufgespielt werden, um die Liste der bereitgestellten Manöversets zu vervollständigen und folglich das bestimmte Parkszenario, welches bislang nicht abgedeckt werden konnte, nunmehr abzudecken. Der Nachtrag der Manöversets liefert demnach ein zuverlässiges Backup für den Fall, dass das trainierte, machine learning basierte System keine Auswahl eines geeigneten Manöversets für das entsprechende Parkszenario treffen kann.

Ein weiterer Gegenstand der Erfindung betrifft ein Computerprogrammprodukt zur Führung eines Fahrzeugs, wobei das Computerprogrammprodukt Instruktionen umfasst, die, wenn ausgeführt auf einem Steuergerät oder einem Rechner des Fahrzeugs, das Verfahren nach der vorhergehenden Beschreibung ausführt.

Ein weiterer Gegenstand der Erfindung betrifft eine Parkassistenzvorrichtung für ein Fahrzeug. Die Parkassistenzvorrichtung umfasst eine Umfeldsensorik zum Erfassen von Umgebungsdaten über einen Umgebungsbereich des Fahrzeugs. Zudem weist die Parkassistenzvorrichtung eine Auswerteeinrichtung auf, welche ausgebildet ist, ein Parkszenario basierend auf den erfassten Umgebungsdaten zu ermitteln.

Des Weiteren umfasst die Parkassistenzvorrichtung ein trainiertes, machine learning basiertes System, welches ausgebildet ist, mindestens eines der von der Auswerteeinrichtung bereitgestellten Manöversets basierend auf seinen trainierten Parametern, der erfassten Umgebungsdaten und des ermittelten Parkszenarios auszuwählen. Besonders bevorzugt ist das machine leanring basierte System als ein neuronales Netz ausgebildet. Unter dem trainierten, machine learning basierten System ist insbesondere das machine learning basierte System mit abgeschlossener Trainingsphase zu verstehen.

Es ist möglich, dass die mindestens eine Parktrajektorie auf dem mindestens einen ausgewählten Manöverset basiert, im Speziellen das mindestes eine ausgewählte Manöverset unverändert als Parktrajektorie übernommen wird. Jedoch sieht eine bevorzugte Weiterbildung vor, dass die Auswerteeinrichtung, eine Recheneinheit des Fahrzeugs oder das trainierte, machine learning basierte System ausgebildet ist, eine Anpassung des mindestens einen ausgewählten Manöversets auf Basis der erfassten Umgebungsdaten und des ermittelten Parkszenarios durchzuführen und das mindestens eine angepasste Manöverset als Parktrajektorie auszugeben. In der letzteren Ausführungsform werden bei der Auswahl des mindestens einen Manöversets vorzugsweise lediglich die wichtigsten Umgebungsdaten berücksichtigt, welche erforderlich sind, um eine sinnvolle Auswahl treffen zu können. Auf diese Weise sind hierfür aufzuwendende Rechenressourcen auf das Nötigste beschränkt, die ansonsten unter Berücksichtigung des gesamten Umfeldmodells einen erheblichen Zeitaufwand zufolge hätte. Insbesondere wird nach der Auswahl des mindestens einen Manöversets dieses in einem nächsten Schritt unter Berücksichtigung weiterer Umgebungsdaten angepasst, sodass die Parktrajektorie präzisiert und folglich ein effizienter Parkvorgang ermöglicht ist. Auf diese Weise kann der Rechenaufwand, welcher zur Bereitstellung der mindestens einen Parktrajektorie erforderlich ist, auf einen kleinen Bruchteil der bereitgestellten Manöversets reduziert werden.

Insbesondere umfasst die Parkassistenzvorrichtung eine Steuereinrichtung, welche ausgebildet ist, die von der Auswerteeinrichtung bzw. dem trainierten, machine learning basierten System ausgegebene Parktrajektorie auszuführen.

Ein weiterer Gegenstand der Erfindung betrifft ein Fahrzeug mit einer Parkassistenzvorrichtung nach der vorhergehenden Beschreibung.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.
- Figur 1: eine schematische Darstellung einer Parkassistenzvorrichtung für ein Fahrzeug;
- Figur 2: ein Ausführungsbeispiel zum Trainieren eines machine learning basierten Systems und die Planung einer Parktrajektorie mittels des trainierten, machine learning basierten Systems;
- Figur 3: ein Ausführungsbeispiel eines Parkszenarios, welches durch ein trainiertes, machine learning basierten Systems der in Figur 1 gezeigten Parkassistenzvorrichtung nicht abgedeckt werden kann;
- Figur 4: ein Verfahren zum Planen eines automatisierten Parkvorgangs für das Fahrzeug.

In der folgenden Beschreibung können gleiche, funktional gleiche und funktional zusammenhängende Elemente mit den gleichen Bezugszeichen versehen sein.

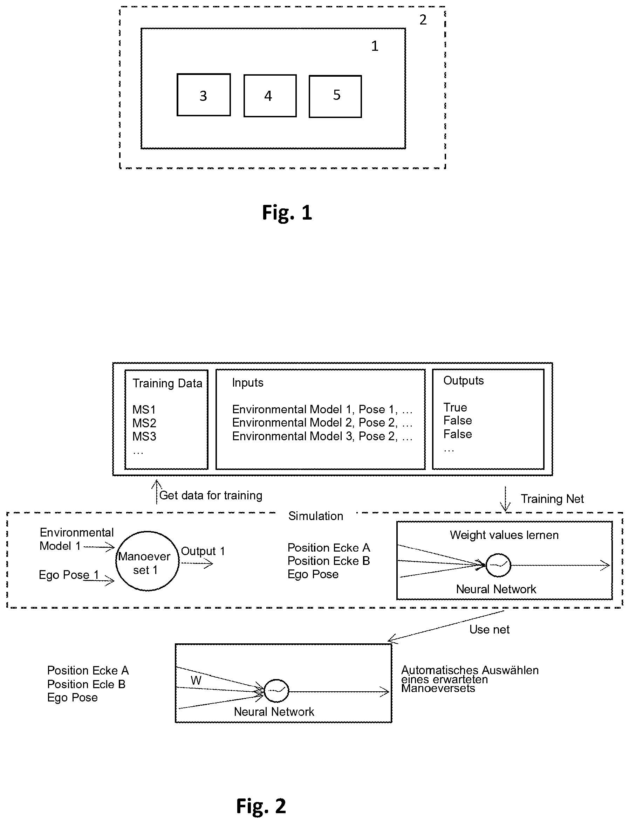

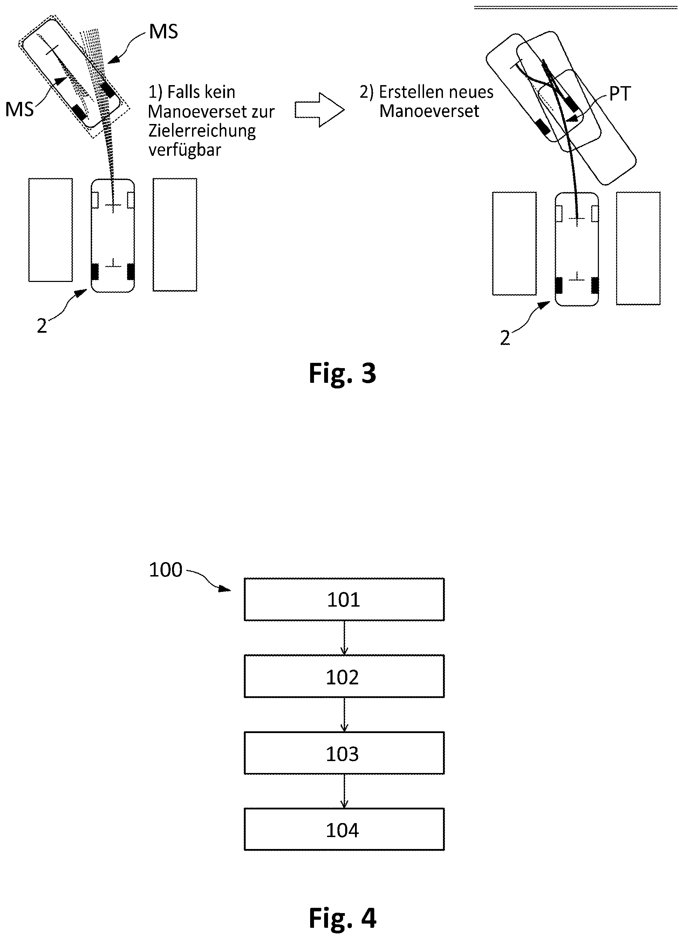

Figur 1 zeigt schematisch eine Parkassistenzvorrichtung 1 für ein Fahrzeug 2. Die Parkassistenzvorrichtung 1 umfasst eine Umfeldsensorik 3 zum Erfassen von Umgebungsdaten über einen Umgebungsbereich des Fahrzeugs 2, sowie eine Auswerteeinrichtung 4, welche ausgebildet ist, basierend auf den erfassten Umgebungsdaten ein Parkszenario zu ermitteln. Weiterhin ist die Auswerteeinrichtung 4 ausgebildet, Manöversets MS (siehe Figur 3) bereitzustellen.

Die Parkassistenzvorrichtung 1 umfasst ein trainiertes, machine learning basiertes System 5, welches ausgebildet ist, mindestens eines der von der Auswerteeinrichtung 4 bereitgestellten Manöversets MS basierend auf seinen trainierten Parametern, der erfassten Umgebungsdaten und des ermittelten Parkszenarios auszuwählen. Das trainierte, machine learning basierte System 5 ist beispielsweise ein neuronales Netzwerk. Insbesondere erfolgt mit anderen Worten durch das trainierte, machine learning basierte System eine Auswahl von umsetzbaren Manöversets für das ermittelte Parkszenario aus einem breiten Pool an verfügbaren Manöversets.

Beispielsweise ist die Auswerteeinrichtung 4 ausgebildet, für den automatisieren Parkvorgang mindestens eine Parktrajektorie PT basierend auf den ausgewählten Manöversets MS bereitzustellen.

Figur 2 zeigt in einer schematischen Darstellung ein Ausführungsbeispiel zum Trainieren eines neuronalen Netzwerks und die Auswahl von Manöversets MS durch das trainierte neuronale Netzwerk zur Planung einer Parktrajektorie PT.

Zum Trainieren des neuronalen Netzwerks sind Trainingsdaten erforderlich. Vor diesem Hintergrund werden zunächst Simulations- oder Messdaten für verschiedene Parkszenarien aufgezeichnet, welche manövrierte Parktrajektorien und entsprechende Umfeldmodelle umfassen. In einem nächsten Schritt werden die manövrierten Parktrajektorien und entsprechenden Umgebungsmodelle zur Erweiterung der Messdaten modifiziert, indem z. B. eine Anpassung der Umfeldsituation wie die Ego-Fahrzeugposition, die Zielposition und/oder Formen und Positionen von Messobjekten in der erfassten Umgebung erfolgt. Die modifizierten Messdaten werden daraufhin geprüft, ob sie für das jeweils vorgegebene Parkszenario anwendbar sind. Das Trainieren des neuronalen Netzwerks erfolgt schließlich auf Basis der anwendbaren Daten, die beispielsweise mittels eines Erreichbarkeitstests ermittelt werden können. Ist das neuronale Netzwerk trainiert, kann dieses mindestens eines der von der Auswerteeinrichtung bereitgestellten Manöversets auf Basis seiner trainierten Parameter, der erfassten Umgebungsdaten und es ermittelten Parkszenarios auswählen.

Falls, wie in Figur 3 gezeigt, das trainierte, machine learning basierte System keine Auswahl geeigneter Manöversets MS für das entsprechende Parkszenario treffen kann, ist bevorzugt, dass mindestens ein Manöverset MS durch einen menschlichen Experten erstellt und zu den bereits bereitgestellten Manöversets MS ergänzt wird. Das neue Manöverset MS ermöglicht, dass das trainierte, machine learning basierte System nunmehr eine Auswahl eines geeigneten Manöversets für das entsprechende Parkszenario treffen kann. Auf diese Weise ist eine zunehmend vollständige Abdeckung verschiedenster Parksituationen gewährleistet.

Figur 4 zeigt schematisch das Verfahren 100 zum Planen des automatisierten Parkvorgangs für das Fahrzeug 2, umfassend die Schritte:
- Erfassen von Umgebungsdaten über einen Umgebungsbereich des Fahrzeugs 101,
- Ermitteln eines Parkszenarios basierend auf den ermittelten Umgebungsdaten 102,
- Bereitstellen von Manöversets MS 103,
- Bereitstellen von mindestens einer Parktrajektorie, wobei zur Bereitstellung der mindestens einen Parktrajektorie PT eine Auswahl von mindestens einem der bereitgestellten Manöversets MS durch ein trainiertes machine learning basiertes System 5 erfolgt, wobei die Auswahl auf trainierten Parametern des trainierten machine learning basierten Systems 5, der erfassten Umgebungsdaten und des ermittelten Parkszenarios basiert 104.
- Beispielsweise wird die mindestens eine bereitgestellte Parktrajektorie PT an eine Steuereinrichtung der Parkassistenzvorrichtung 1 oder des Fahrzeugs 2 ausgegeben, welche die Durchführung des automatisierten Parkvorgangs steuert.

## Patentansprüche

1. Verfahren (100) zum Planen eines automatisierten Parkvorgangs für ein Fahrzeug (2), umfassend folgende Schritte:
- Erfassen von Umgebungsdaten über einen Umgebungsbereich des Fahrzeugs (2) (101),
- Ermitteln eines Parkszenarios basierend auf den ermittelten Umgebungsdaten (102),
- Bereitstellen von Manöversets (MS) (103), wobei jedes der Manöversets (MS) eine Mehrzahl an parametrisierten Fahrmanövern umfasst, die das gleiche Trajektorienmuster aufweisen, wobei ein Manöverset (MS) ein Set von geometrischen Segmenten mit einer festen Reihenfolge an Segmenttypen ist, wobei die bereitgestellten Manöversets (MS) zumindest abschnittsweise für mindestens ein Einparkszenario anwendbar sind,
- Bereitstellen von mindestens einer Parktrajektorie, wobei zur Bereitstellung der mindestens einen Parktrajektorie eine Auswahl von mindestens einem der bereitgestellten Manöversets (MS) durch ein trainiertes machine learning basiertes System (5) erfolgt, wobei die Auswahl auf trainierten Parametern des trainierten machine learning basierten Systems (5), der erfassten Umgebungsdaten und des ermittelten Parkszenarios basiert (104).

2. Verfahren (100) nach Anspruch 1, wobei zum Trainieren des machine learning basierten Systems Messdaten realer Parkszenarien aufgezeichnet werden, wobei die Messdaten von einem Fahrer manövrierte Parktrajektorien und entsprechende Umfeldmodelle umfassen, wobei in einem nächsten Schritt die manövrierten Parktrajektorien und entsprechenden Umgebungsmodelle zur Erweiterung der Messdaten modifiziert werden, wobei die modifizierten Messdaten geprüft werden, ob sie für das jeweils vorgegebene Parkszenario anwendbar sind, und wobei das Trainieren des machine learning basierten Systems auf Basis der anwendbaren Daten erfolgt.

3. Verfahren (100) nach einem der vorhergehenden Ansprüche, wobei die bereitgestellten Manöversets (MS) zumindest abschnittsweise für mindestens eines der folgenden Einparkszenarien anwendbar ist: Parallelparken, frontales Einparken, senkrechtes Einparken, seitlich Vorwärtseinparken und/oder seitlich Rückwärtseinparken.

4. Verfahren (100) nach einem der vorhergehenden Ansprüche, wobei ein Manöverset (MS) manuell ergänzt wird, sollte ein bestimmtes Parkszenario durch das trainierte, machine learning basierte System (5) nicht abgedeckt werden können.

5. Computerprogrammprodukt zum Planen eines automatisierten Parkvorgangs für ein Fahrzeug (2), wobei das Computerprogrammprodukt Instruktionen umfasst, die, wenn ausgeführt auf einem Steuergerät oder einem Rechner des Fahrzeugs (2), das Verfahren nach einem der vorhergehenden Ansprüche ausführt.

6. Parkassistenzvorrichtung (1) für ein Fahrzeug (2),
mit einer Umfeldsensorik (3) zum Erfassen von Umgebungsdaten über einen Umgebungsbereich des Fahrzeugs (2),
mit einer Auswerteeinrichtung (4), welche ausgebildet ist, basierend auf den erfassten Umgebungsdaten ein Parkszenario zu ermitteln, wobei die Auswerteeinrichtung (4) ausgebildet ist, Manöversets (MS) bereitzustellen, wobei jedes der Manöversets (MS) eine Mehrzahl an parametrisierten Fahrmanövern umfasst, die das gleiche Trajektorienmuster aufweisen, wobei ein Manöverset (MS) ein Set von geometrischen Segmenten mit einer festen Reihenfolge an Segmenttypen ist, wobei die bereitgestellten Manöversets zumindest abschnittsweise für mindestens ein Einparkszenario anwendbar sind,
mit einem trainierten, machine learning basierten System (5), welches ausgebildet ist, mindestens eines der von der Auswerteeinrichtung (4) bereitgestellten Manöversets (MS) basierend auf seinen trainierten Parametern, der erfassten Umgebungsdaten und des ermittelten Parkszenarios auszuwählen.

7. Parkassistenzvorrichtung (1) nach Anspruch 6, wobei der das trainierte, machine learning basierte System (5) als ein neuronales Netz ausgebildet ist.

8. Parkassistenzvorrichtung (1) nach Anspruch 6 oder 7, wobei die Auswerteeinrichtung (4) oder das trainierte, machine learning basierte System (5) ausgebildet ist, eine Anpassung des mindestens einen ausgewählten Manöversets (MS) auf Basis der erfassten Umgebungsdaten und des ermittelten Parkszenarios durchzuführen und das mindestens eine angepasste Manöverset (MS) als Parktrajektorie (PT) bereitzustellen.

9. Fahrzeug (2) mit einer Parkassistenzvorrichtung (1) nach einem der vorhergehenden Ansprüche 6 bis 8.

## Claims

1. A method (100) for planning an automated parking procedure for a vehicle (2), comprising the following steps:
- capturing surroundings data relating to a surrounding area of the vehicle (2) (101),
- determining a parking scenario on the basis of the determined surroundings data (102),
- providing manoeuvre sets (MS) (103), wherein each of the manoeuvre sets (MS) comprises a plurality of parameterized driving manoeuvres which have the same trajectory pattern, wherein a manoeuvre set (MS) is a set of geometric segments having a fixed order of segment types, wherein the manoeuvre sets (MS) provided are applicable at least in sections for at least one parking scenario,
- providing at least one parking trajectory, wherein at least one of the provided manoeuvre sets (MS) is selected by a trained machine learning-based system (5) in order to provide the at least one parking trajectory, wherein the selection is based (104) on trained parameters of the trained machine learning-based system (5), the captured surroundings data, and the determined parking scenario.

2. The method (100) as claimed in claim 1, wherein measurement data of real parking scenarios are recorded in order to train the machine learning-based system, wherein the measurement data comprise parking trajectories manoeuvred by a driver and corresponding surroundings models, wherein in a next step the manoeuvred parking trajectories and corresponding surroundings models are modified to expand the measurement data, wherein the modified measurement data are checked as to whether they are applicable for the respectively specified parking scenario, and wherein the machine learning-based system is trained on the basis of the applicable data.

3. The method (100) as claimed in any one of the preceding claims, wherein the provided manoeuvre sets (MS) are applicable at least in sections for at least one of the following parking scenarios: parallel parking, frontal parking, perpendicular parking, lateral forward parking, and/or lateral reverse parking.

4. The method (100) as claimed in any one of the preceding claims, wherein a manoeuvre set (MS) is manually supplemented should a particular parking scenario not be able to be covered by the trained, machine learning-based system (5).

5. A computer program product for planning an automated parking procedure for a vehicle (2), wherein the computer program product comprises instructions that, when executed on a control unit or a computer of the vehicle (2), carry out the method as claimed in one of the preceding claims.

6. A parking assistance device (1) for a vehicle (2),
having a surroundings sensor system (3) for capturing surroundings data relating to a surrounding area of the vehicle (2),
having an evaluation unit (4), which is designed to determine a parking scenario on the basis of the captured surroundings data, wherein the evaluation unit (4) is designed to provide manoeuvre sets (MS), wherein each of the manoeuvre sets (MS) comprises a plurality of parameterized driving manoeuvres which have the same trajectory pattern, wherein a manoeuvre set (MS) is a set of geometric segments having a fixed order of segment types, wherein the manoeuvre sets provided are applicable at least in sections for at least one parking scenario,
having a trained, machine learning-based system (5) designed to select at least one of the manoeuvre sets (MS) provided by the evaluation unit (4) on the basis of its trained parameters, the captured surroundings data and the determined parking scenario.

7. The parking assistance device (1) as claimed in claim 6, wherein the trained, machine learning-based system (5) is designed as a neural network.

8. The parking assistance device (1) as claimed in claim 6 or 7, wherein the evaluation unit (4) or the trained, machine learning-based system (5) is designed to perform an adaptation of the at least one selected manoeuvre set (MS) on the basis of the acquired surroundings data and the determined parking scenario and to provide the at least one adapted manoeuvre set (MS) as a parking trajectory (PT).

9. A vehicle (2) having a parking assistance device (1) as claimed in any one of preceding claims 6 to 8.

## Revendications

1. Procédé (100) de planification d'un processus de stationnement automatisé pour un véhicule (2), comprenant les étapes suivantes :
- la capture de données d'environnement concernant une région environnante du véhicule (2) (101),
- la détermination d'un scénario de stationnement sur la base des données d'environnement déterminées (102),
- la fourniture d'ensembles de manœuvres (MS) (103), dans lequel chacun des ensembles de manœuvres (MS) comprend une pluralité de manœuvres de conduite paramétrées présentant le même modèle de trajectoire, dans lequel un ensemble de manœuvres (MS) est un ensemble de segments géométriques avec une séquence fixe de types de segments, dans lequel les ensembles de manœuvres fournis (MS) sont applicables au moins par sections pour au moins un scénario de stationnement,
- la fourniture **d'au** moins une trajectoire de stationnement, dans lequel, pour fournir l'au moins une trajectoire de stationnement, une sélection d'au moins l'un des ensembles de manœuvres fournis (MS) est effectuée par un système (5) entraîné basé sur l'apprentissage automatique, dans lequel la sélection est basée sur des paramètres entraînés du système (5) entraîné basé sur l'apprentissage automatique, les données d'environnement capturées et le scénario de stationnement déterminé (104).

2. Procédé (100) selon la revendication 1, dans lequel, pour l'entraînement du système basé sur l'apprentissage automatique, des données de mesure de scénarios de stationnement réels sont enregistrées, dans lequel les données de mesure comprennent des trajectoires de stationnement manœuvrées par un conducteur et des modèles d'environnement correspondants, dans lequel, dans une étape suivante, les trajectoires de stationnement manœuvrées et les modèles d'environnement correspondants sont modifiés pour étendre les données de mesure, dans lequel les données de mesure modifiées sont vérifiées pour savoir si elles sont applicables au scénario de stationnement prédéterminé respectif, et dans lequel l'entraînement du système basé sur l'apprentissage automatique est effectué sur la base des données applicables.

3. Procédé (100) selon l'une des revendications précédentes, dans lequel les ensembles de manœuvres (MS) fournis sont applicables au moins par sections pour au moins l'un des scénarios de stationnement suivants : stationnement en parallèle, stationnement frontal, stationnement vertical, stationnement latéral avant et/ou stationnement latéral arrière.

4. Procédé (100) selon l'une des revendications précédentes, dans lequel un ensemble de manœuvres (MS) est complété manuellement si un scénario de stationnement spécifique ne peut pas être couvert par le système (5) entraîné basé sur l'apprentissage automatique.

5. Produit de programme informatique pour planifier un processus de stationnement automatisé pour un véhicule (2), dans lequel le produit de programme informatique comprend des instructions qui, lorsqu'elles sont exécutées sur une unité de commande ou un ordinateur du véhicule (2), exécutent le procédé selon l'une des revendications précédentes.

6. Dispositif d'aide au stationnement (1) pour un véhicule (2), comportant un système de capteurs environnementaux (3) pour capturer des données d'environnement concernant une région environnante du véhicule (2),
comportant un dispositif d'évaluation (4) conçu pour déterminer un scénario de stationnement sur la base des données d'environnement capturées, dans lequel le dispositif d'évaluation (4) est conçu pour fournir des ensembles de manœuvres (MS), dans lequel chacun des ensembles de manœuvres (MS) comprend une pluralité de manœuvres de conduite paramétrées qui ont le même modèle de trajectoire, dans lequel un ensemble de manœuvres (MS) est un ensemble de segments géométriques avec une séquence fixe de types de segments, dans lequel les ensembles de manœuvres fournis sont applicables au moins par sections pour au moins un scénario de stationnement,
comportant un système (5) entraîné basé sur l'apprentissage automatique qui est conçu pour sélectionner au moins l'un des ensembles de manœuvres (MS) fournis par le dispositif **d'évaluation** (4) sur la base de ses paramètres entraînés, des données d'environnement capturées et du scénario de stationnement déterminé.

7. Dispositif d'aide au stationnement (1) selon la revendication **6,** dans lequel le système (5) entraîné basé sur l'apprentissage automatique est conçu comme un réseau neuronal.

8. Dispositif d'aide au stationnement (1) selon la revendication 6 ou **7,** dans lequel le dispositif d'évaluation (4) ou le système (5) entraîné basé sur l'apprentissage automatique est conçu pour effectuer une adaptation de l'au moins un ensemble de manœuvres sélectionné (MS) sur la base des données d'environnement capturées et du scénario de stationnement déterminé et pour fournir l'au moins un ensemble de manœuvres adapté (MS) en tant que trajectoire de stationnement (PT).

9. Véhicule (2) équipé d'un dispositif d'aide au stationnement (1) selon l'une des revendications 6 à 8 précédentes.
